# EUROPÄISCHE PATENTSCHRIFT

(11) **EP 1 636 015 B1**
(45) Veröffentlichungstag und Bekanntmachung des Hinweises auf die Patenterteilung: **08.02.2012**
(21) Anmeldenummer: 04717055.0
(22) Anmeldetag: 04.03.2004
(51) Int. Cl.: B29C 59/02, B44B 5/00

(54) **PRÄGEVORRICHTUNG**
STAMPING DEVICE
DISPOSITIF D'ESTAMPAGE

(30) Priorität: 24.06.2003 DE 10328198
(43) Veröffentlichungstag der Anmeldung: 22.03.2006
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2004/002158
(87) Internationale Veröffentlichungsnummer: WO 2004/113054

(56) Entgegenhaltungen:
- EP-A- 0 443 292
- DE-A- 4 241 210
- DE-C- 894 974
- GB-A- 704 949
- US-A- 2 872 861
- US-A- 3 627 861

## Beschreibung

Die Erfindung betrifft eine Prägevorrichtung zum Einprägen von Kenndaten, insbesondere in Form von Code-Ziffern, in Kunststofferzeugnisse, wie Behälter, die vorzugsweise nach einem Blasform-, Füll- und Siegelverfahren hergestellt sind.

Im Stand der Technik (DE 199 26 329 A1) sind Verfahren und Formvorrichtungen zum Herstellen von Behältern bekannt, bei denen ein Schlauch plastifizierten Kunststoffmaterials in eine Formeinrichtung hinein extrudiert wird, das eine Ende des Schlauches durch Verschweißen verschlossen wird und durch Erzeugen eines am Schlauch wirksamen pneumatischen Druckgradienten dieser aufgeweitet und zur Bildung des Behälters an eine formgebende Wand der Formeinrichtung, bestehend aus zwei gegenüberliegenden Formwerkzeugen, angelegt wird. Über einen entsprechenden Fülldorn ist dann der Kunststoffbehälter steril innerhalb der Formeinrichtung befüllt und nach Entnahme des Fülldornes anschließend hermetisch unter Bildung einer vorgebbaren Kopfgeometrie verschlossen, wobei für die Bildung des eigentlichen Kunststoffbehälters, in dem später das Fluid bevorratet ist, zwei Behälter-Formgebungsbacken mittels hydraulischer oder elektromotorischer Antriebsmittel für den Erhalt einer Schließstellung aufeinander zu und in eine ihrer Öffnungsstellungen voneinander gegenläufig wegbewegbar sind. Die mittels der beiden getrennt ansteuerbaren Kopfbacken zu erzeugenden Kopfgeometrien umfassen dabei regelmäßig auch das Halsteil des Kunststoffbehälters - auch in Form von Ampullen -, das über eine Trennstelle von einem Kopfstück verschlossen für einen Fluid-Entnahmevorgang öffenbar ist, sobald das Kopfstück über einen an ihm angeformten Knebelteil über die Trennstelle abgetrennt und dergestalt vom eigentlichen Kunststoffbehälter entfernt wird.

Dahingehende Verfahren und Vorrichtungen zum Durchführen dieser Verfahren sind in einer Vielzahl von Ausführungsformen bekannt und finden verbreitet Anwendung bei Verpackungssystemen für flüssige oder pastöse Produkte, beispielsweise im Rahmen des bekannten bottelpack^{®} - Systems.

Durch die EP 0 359 971 B1 ist ein vergleichbares Blasform-, Füll- und Siegelverfahren zur Herstellung von hohlen Behältern aus Kunststoff bekannt, bei denen für jeden Behälter in einem Werkzeug zwei Hälften geformt und miteinander verschweißt werden, wobei aus einer Abfall-Randzone der bandartig in Reihe hintereinander angeordneten Behälter (Ampullen) ein rahmenförmiger Hohlkörper in gleicher Weise wie der Behälter selbst geformt und verschweißt wird.

Bei den genannten bekannten Verfahren besteht nun die Möglichkeit, entweder am Knebelteil selbst, über das das Verschluß-Kopfstück für einen Entnahmevorgang vom eigentlichen Behälter getrennt wird, oder im Bereich der Abfall-Randzone, die den jeweiligen Behälter umgibt und der zusammen mit dem jeweiligen Behälter auch als Verkaufseinheit veräußerbar ist, Kenndaten anzubringen, insbesondere in Form von Code-Ziffern, die unter anderem Rückschlüsse zulassen können über den Ort und das Datum der Herstellung sowie über Inhalt und Menge des jeweiligen Behälters einschließlich etwaiger Ablaufdaten für den Behälterinhalt. Das Anbringen der dahingehenden Kenndaten, die auch unverschlüsselt zur Information von Endverbraucherkreisen vorliegen können, die sich aber vorrangig in codierter Form mit ihrem Informationsgehalt an die Hersteller- und Zwischenabnehmerkreise wenden, erfolgt bei den bekannten Verfahren in der Herstellmaschine selbst, wobei die Code-Ziffern vor Durchführen des Blasform-, Füll- und Siegelverfahrens in die Formhälften eingepaßt werden, um dergestalt direkt im Formprozeß die Code-Ziffern im jeweiligen Behälter einzuprägen. Da die dahingehenden Herstellmaschinen durchaus zehn und mehr Einmal-Formen aufweisen können, kann es mehrere Stunden und bis zu einem Tag dauern, um die Code-Ziffern in Form von Matrizen oder Einzellettern, die in die Form einzupassen sind, auszutauschen; letzterer Zeitaufwand ist insbesondere notwendig, wenn in den verschiedenen Formen einer Herstellmaschine herstellbedingt unterschiedliche Code-Ziffern anzubringen sind. Da das Anbringen der Code-Ziffern von Hand innerhalb der Formen sehr umständlich ist, ist darüber hinaus nicht ausgeschlossen, dass wegen nur eines Fehlers, also beispielsweise dem Anbringen einer falschen Code-Ziffer in der Form, der Herstellprozeß gestoppt werden muß und die bisher nach dem Verfahren mit der Herstellmaschine hergestellten Behälter mit falscher Code-Ziffer müssen komplett entsorgt werden. Auch steht bei dahingehenden Austauschvorgängen die Herstellmaschine zum Produzieren der Behälter nicht zur Verfügung, was zu hohen Betriebskosten führt.

Durch die EP-A-0 443 292 ist eine gattungsgemäße Prägevorrichtung zum Einprägen von Kenndaten, insbesondere in Form von Code-Ziffern, in Kunststofferzeugnisse, wie Behälter, bekannt, wobei in einem Gestell der Vorrichtung mindestens ein Prägestempel mit einer Prägeeinheit mit auswechselbaren Kenndateneinheiten längsverfahrbar geführt ist und in einem angehobenen Zustand die Zu- und Abfuhr der zu prägenden bzw. geprägten Erzeugnisse ermöglicht und in einem abgesenkten Zustand die Einprägung der Erzeugnisse vornimmt, wobei in gegenläufiger Bewegungsrichtung synchron oder zeitlich versetzt mit dem Prägestempel verfahrbar ein Gegenstempel vorhanden ist (vgl. Fig.8 und 9), und wobei das Gestell säulenartige Führungen für die Längsführung der plattenartigen Prägeeinheit und einer Gegenhalteplatte des Gegenhaltestempels aufweist. Bei insbesondere lang andauerndem Einsatz der bekannten Prägevorrichtung ist nicht auszuschließen, dass es zu verwischten Prägungen oder gar Fehlprägungen kommen kann.

Dokument EP-A-0 443 292 zeigt die Merkmale des Oberbegriffs des Anspruchs 1.

Ausgehend von diesem Stand der Technik liegt der Erfindung die Aufgabe zugrunde, die beschriebenen bekannten Verfahren und Vorrichtungen dahingehend weiter zu verbessern, dass in einfacher und kostengünstiger Weise ein Austauschvorgang bezogen auf die Kenndaten für Kunststoffbehälter möglich ist, dass insbesondere der eigentliche Herstellprozeß für die Kunststoffbehälter hierdurch nicht beeinträchtigt wird, und dass mittels genauer Einprägevorgänge sich gut erkennbare Kenndaten auf dem Kunststofferzeugnis erreichen lassen. Eine dahingehende Aufgabe löst eine Prägevorrichtung mit den Merkmalen des Patentanspruches 1 in seiner Gesamtheit.

Dadurch, dass bei der erfindungsgemäßen Prägevorrichtung eine über eine Säulenaufhängung mit dem Gestell verbundene Führungsplatte vorhanden ist, die zwischen plattenartiger Prägeeinheit und Gegenhalteplatte angeordnet die Führung der Kunststofferzeugnisse für einen Einprägevorgang innerhalb des Gestells vornimmt, ist über die Führungsplatte gewährleistet, dass die zu prägenden Kunststofferzeugnisse in eine genau vorgegebene Prägeposition innerhalb der Prägevorrichtung gelangen und versehentlich für die Einprägung nicht vorgesehene Komponenten des Behälters den Prägevorgang durchlaufen und gegebenenfalls dadurch beschädigt werden. Ferner dient die Führungsplatte zusammen mit der Gegenhalteplatte als Abstützung für das Kunststofferzeugnis während des Prägevorganges.

Die erfindungsgemäße Prägevorrichtung zum Einprägen von Kenndaten, insbesondere in Form von Code-Ziffern, in Kunststofferzeugnisse, wie Behälter, die vorzugsweise nach einem Blasform-, Füll- und Siegelverfahren hergestellt sind, weist in einem Gestell der Vorrichtung längsverfahrbar geführt mindestens einen Prägestempel mit einer Prägeeinheit mit auswechselbaren Kenndateneinheiten auf, wobei die Prägeeinheit in einem angehobenen Zustand die Zu- und Abfuhr der zu prägenden bzw. geprägten Erzeugnisse ermöglicht und in einem abgesenkten Zustand die Einprägung der Erzeugnisse vornimmt.

Die dahingehende Prägevorrichtung ist außerhalb der eigentlichen Herstellmaschine für das Durchführen des Blasform-, Füll- und Siegelverfahrens angeordnet und erst werden die Behälter vollständig hergestellt und befüllt sowie verschlossen, bevor sie zum Einprägen von Kenndaten an die Prägevorrichtung weitergeleitet werden. Die erfindungsgemäße Prägevorrichtung mit ihrem Gestellaufbau und dem Prägestempel ermöglicht sehr hohe Ausstoßraten an zu prägendem Gut und der Einprägevorgang läßt sich dem Grunde nach über die Prägevorrichtung zeitlich und räumlich von dem eigentlichen Herstellprozeß an Kunststofferzeugnissen entkoppeln. Des weiteren ist die Prägevorrichtung aufgrund ihres Gestellaufbaus sehr gut von außen zugängl ich und über die auswechselbaren Kenndateneinheiten läßt sich in zeitlich rascher Folge und mit geringem Einstellaufwand ein Austauschvorgang an Kenndaten für die Behälter (Ampullen) erreichen. Letzteres spielt insbesondere eine Rolle, wenn durch eine falsch gewählte Code-Ziffer die Einprägevorgänge zu unterbrechen und die falsche Code-Ziffer gegen die richtige zu tauschen ist. In sicherheitstechnischer Sicht ist die Prägevorrichtung gut zu beherrschen und kann um sicherheitstechnische Anlagenteile ergänzt für eine Bedienperson gefährliche Zustände vermeiden helfen.

Das Gestell der Prägevorrichtung weist säulenartige Führungen für die Längsführung der plattenartigen Prägeeinheit und eine Gegenhalteplatte des Gegenhaltestempels auf. Aufgrund der Säulenführungen ist die Gestellkonstruktion der Prägevorrichtung ausgesteift, sodass sich dergestalt genaue Einprägevorgänge mit gut erkennbaren Kenndaten erreichen lassen und im übrigen werden die durch den Einprägevorgang auftretenden Prägekräfte über die Säulenführungen sicher in das Gestell der Prägevorrichtung abgeleitet.

Bei einer bevorzugten Ausführungsform der erfindungsgemäßen Prägevorrichtung ist für die Einprägung der Kenndaten das Kunststofferzeugnis und/oder die Prägeeinheit erwärmbar. So läßt sich die Restwärme des Kunststofferzeugnisses nach seinem Herstellvorgang unter Wärme und Druck nutzen, um die Einprägung mittels der Prägeeinheit des Prägestempels vorzunehmen. Es besteht aber auch die Möglichkeit, zusätzlich die Prägeeinheit zu erwärmen oder nach dem Herstellprozeß abgekühlte Kunststofferzeugnisse durch die erwärmte Prägeeinheit mit den benötigten Kenndaten zu versehen.

Als besonders vorteilhaft hat es sich erwiesen, die Zu- und Abfuhrrichtung für das Kunststofferzeugnis quer zur Prägerichtung mit dem Prägestempel vorzunehmen und in gegenläufiger Bewegungsrichtung synchron oder zeitlich versetzt mit dem Prägestempel verfahrbar einen Gegenhaltestempel zur Abstützung des Kunststofferzeugnisses heranzuziehen. Aufgrund dieser Ausgestaltung ist es möglich, hohe Ausstoßraten der Herstellmaschine an erzeugten Kunststofferzeugnissen sicher und im selben Takt zu prägen, wie es der Herstelltakt der Maschine vorgibt.

Vorzugsweise ist ferner vorgesehen, dass die plattenartige Prägeeinheit sowie die Gegenhalteplatte einander benachbart zugewandt sind und der Präge- sowie der Gegenhaltestempel greifen mit ihren Kolbenstangen an der jeweils zuordenbaren Platte an und sind mit ihrem Gehäuseteil feststehend an dem Gestell angebracht. Dergestalt lassen sich über die Gehäuseteile der als Arbeitszylinder ausgebildeten Stempel die Grundkonstruktion des Gestells mit den Säulenführungen weiter aussteifen und als Arbeitszylinder für den Präge- sowie den Gegenhaltestempel können hydraulische oder pneumatische Zylinder sowie elektrische Stellmotoren nebst Spindeltrieben eingesetzt werden.

Um möglichst viele Einprägevorgänge an den Kunststofferzeugnissen vornehmen zu können, ist bei einer bevorzugten Ausführungsform der erfindungsgemäßen Prägevorrichtung vorgesehen, dass die Kunststofferzeugnisse in der Art von Ampullen als Behälter ausgebildet sind und in einem Band über eine (Abfall)-Randzone zusammenhängend in zeitlicher Hintereinanderabfolge die Einprägung erhalten, wobei dabei mehrere benachbarte Ampullen gleichzeitig mit der Prägung versehen sind.

Im folgenden wird die erfindungsgemäße Prägevorrichtung anhand eines Ausführungsbeispiels nach der Zeichnung näher erläutert. Dabei zeigen in prinzipieller und nicht maßstäblicher Darstellung die
- Fig.1: eine Seitenansicht auf die grundlegenden Komponenten der Prägevorrichtung, wie sie sich in Richtung des Pfeiles X in Fig.2 ergibt;
- Fig.2: eine weitere Seitenansicht auf die erfindungsgemäße Prägevorrichtung, wie sie sich in Blickrichtung des Pfeiles Y in Fig.1 ergibt;
- Fig.3: in Draufsicht in der Art eines Bandes hintereinander angeordnete Behälter (drei Stück) mit Knebelteilen als kopfseitige Verschlußstücke, die mit Kenndaten versehen sind, wobei die mit X angegebenen Leerstellen mit beliebigen Code-Ziffern oder Buchstaben auch in entschlüsselter Form versehen werden können.

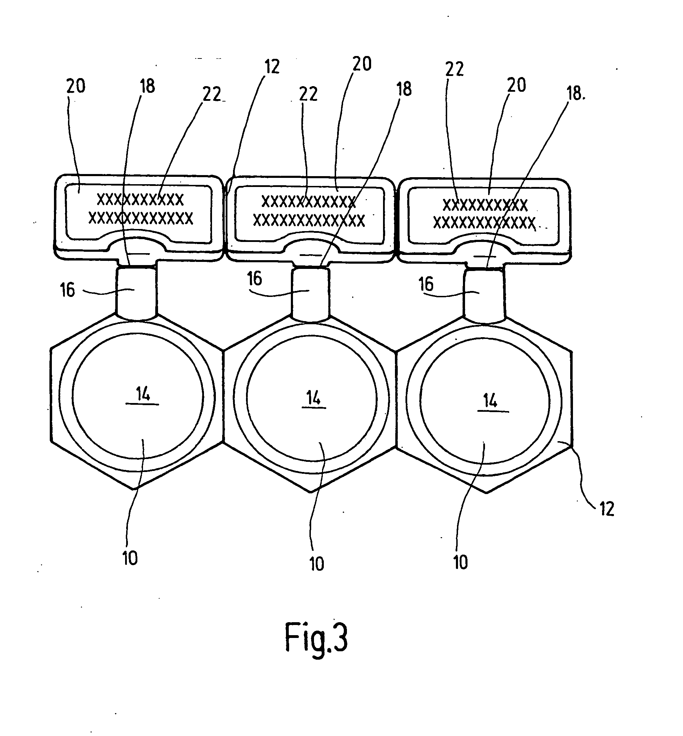

Das in der Fig.3 dargestellte Kunststofferzeugnis zeigt drei Behälter 10, die bandartig und mithin in Reihe hintereinander über eine Randzone 12, ebenfalls aus Kunststoff, miteinander verbunden sind. Das Innere 14 des Behälters 10 ist mit einem Fluid, beispielsweise in Form eines Pharmazeutikums od. dgl., befüllt und als Behälteröffnung dient ein Halsteil 16, das über eine Trennstelle 18 mit einem Knebelverschluß 20 verschlossen ist. Die zwischen Randzone 12 sowie Halsteil 16 und den Knebelverschlüssen 20 möglicherweise noch vorhandene Abfall Randzone aus flächigem Kunststoffmaterial ist gemäß der Darstellung nach der Fig.3 bereits vorzugsweise durch Stanzen entfernt. Der Knebelverschluß 20 selbst ist flächig ausgebildet und erlaubt ein leichtes Öffnen des Behälters 10 durch Abtrennen (Abdrehen) des Knebelverschlusses 20 über die Trennstelle 18 vom zuordenbaren Halsteil 16 von Hand.

Zum Herstellen dahingehender Behälter 10 dienen bekannte Verfahren und Formvorrichtungen (nicht dargestellt), bei denen ein Schlauch plastifizierten Kunststoffmaterials in eine Formeinrichtung hinein extrudiert wird, das eine Ende des Schlauches durch Verschweißen verschlossen wird und durch Erzeugen eines am Schlauch wirksamen pneumatischen Druckgradienten dieser aufgeweitet und zur Bildung des Behälters an eine formgebende Wand der Formeinrichtung, bestehend aus zwei gegenüberliegenden Formwerkzeugen (nicht dargestellt), angelegt wird. Über einen entsprechenden Fülldorn (nicht dargestellt) ist dann der Kunststoffbehälter 10 steril innerhalb der Formeinrichtung befüllt und nach Entnahme des Fülldornes anschließend hermetisch unter Bildung der in Fig.3 gezeigten vorgebbaren Kopfgeometrie verschlossen. Dahingehende Verfahren und Formvorrichtungen sind Stand der Technik und beispielhaft in der DE 199 26 329 A1 sowie in der EP 0 359 971 B1 beschrieben, so dass an dieser Stelle hierauf nicht mehr näher eingegangen wird.

Auf den Flächen der Knebelverschlußteile 20 sind Code-Ziffern 22 angeordnet, wobei als Platzhalter für die Kenndaten in Form der Code-Ziffern die Darstellung von Kreuzen bzw. des Buchstabens X verwendet wurde. An die Stelle der mit X bezeichneten Platzhalter können beliebige Kenn- und Herstelldaten treten, die als Nummern- oder Ziffernfolge in codierter Form insbesondere dem Fachpublikum Informationen geben können, wie über Ort und Art der Herstellung sowie Haltbarkeitsdaten und Fluidinhalte etc.. Die dahingehenden Code-Ziffern 22 können auch unverschlüsselt Endverbraucherkreisen Angaben über Haltbarkeitsdaten, Herstellernamen od. dgl. geben. Auch besteht die Möglichkeit, die angebrachten Code-Ziffern 22 einzufärben, um dergestalt eine Blicklenkung des Benutzers auf das Anzeigefeld mit den Kenndaten zu erreichen. Ferner können als Kenndaten auch bildliche Darstellungen, wie Piktogramme, verwendet werden, beispielsweise um deutlich zu machen, dass nur eine orale Einnahme des Behälterinhalts od. dgl. in Frage kommt. Auch lassen sich dergestalt Gebrauchsanweisungen oder Teile davon durch Einprägungen im Kenndatenfeld wiedergeben.

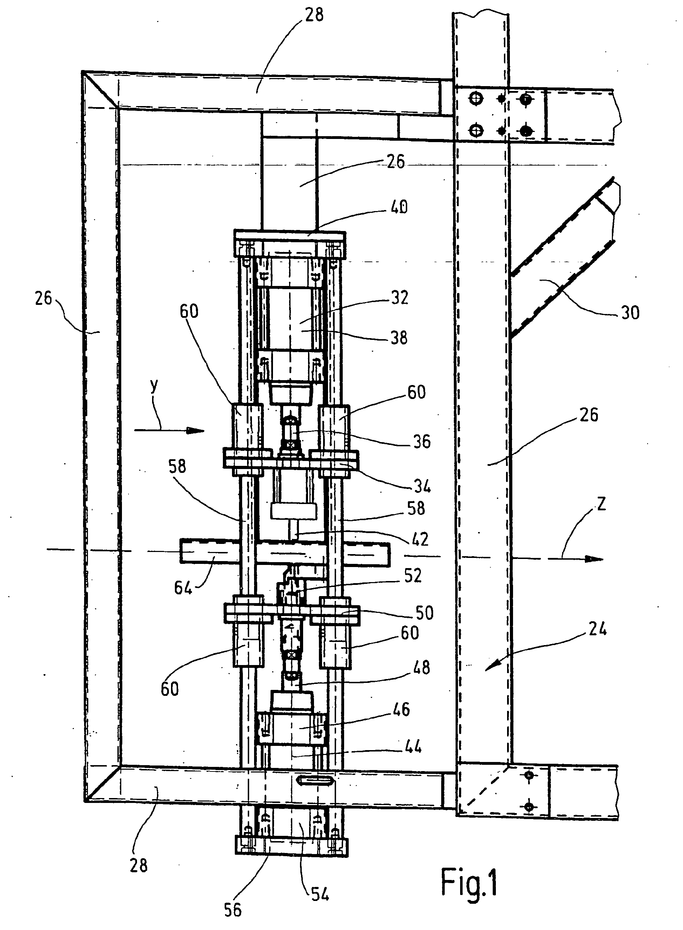

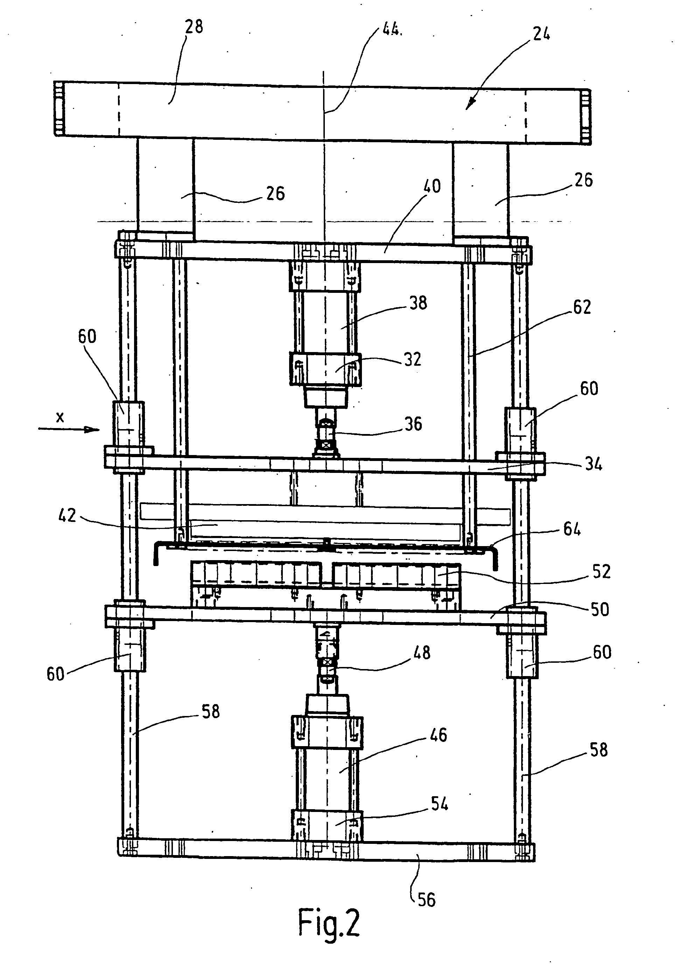

Im folgenden wird nunmehr anhand der Fig.1 und 2 die Prägevorrichtung beschrieben, mit der sich Kenndaten, wie beispielsweise Code-Ziffern 22, auf Behälterteilen anbringen lassen, wobei die Anbringung der Code-Ziffern 22 auf den Knebelverschlüssen 20 gemäß der Darstellung nach der Fig.3 nur beispielhaften Charakter hat. So lassen sich beispielsweise die Kenndaten auch auf Randzonen und Abfall-Randzonen in Verbindung mit den Behältern 10 anordnen oder die Kenndaten lassen sich direkt auf dem Behälter 10 in Bereichen anbringen, die das Innere des Behälters 10 mit seinem Fluid oder einem sonstigen Medium umfassen. Im letztgenannten Fall sind die Einprägevorgänge entsprechend vorsichtig zu veranlassen, um ein Durchprägen des Behälters 10 zu vermeiden, was zum Unbrauchbarwerden des Behälterinhalts führen könnte. Des weiteren gibt es eine Vielzahl an Behälter-Gestaltungsmöglich-keiten, die auch Ampullen- oder Spritzenform aufweisen können, so dass das Ausführungsbeispiel in der Fig.3 nur eine Möglichkeit einer ausgesprochen hohen Anzahl an Varianten für dahingehend nach dem Blasform-, Füll- und Siegelverfahren hergestellten Behältern zeigt.

Die in Fig. 1 und 2 gezeigte Prägevorrichtung zum Einprägen von Kenndaten, insbesondere in Form der genannten Code-Ziffern 22, in Kunststofferzeugnisse, wie Behälter 10 oder Ampullen, die vorzugsweise nach einem Blasform-, Füll- und Siegelverfahren hergestellt sind, weisen ein als Ganzes mit 24 bezeichnetes Gestell auf, das rahmenartig aus Längsträgern 26 und Querträgern 28 zusammengesetzt ist, wobei in den Figuren nur ein Teil der Gestellteile wiedergegeben ist, um dergestalt die wesentlichen Vorrichtungskomponenten besser darstellen zu können. Das Gestell 24 kann aus Längsträgern 26 und Querträgern 28, aber auch aus Einzelholmen bestehen, die miteinander verschweißt, verschraubt oder vernietet und gegebenenfalls weiter mit Schrägstutzen 30 ausgesteift eine Art Hohlkastenrahmen ausbilden, in dem die bewegbaren Maschinenteile der Prägevorrichtung aufgenommen und derart festgelegt sind.

In dem Gestell 24 der Vorrichtung ist ein Prägestempel 32 mit einer Prägeeinheit 34 angeordnet. Der dahingehende Prägestempel 32 ist als Arbeitszylinder ausgebildet und mit einer ein- und ausfahrbaren Kolbenstange 36 versehen, die mit ihrem freien Ende an der plattenartigen Prägeeinheit 34 angreift. Das Gehäuseteil 38 des Arbeitszylinders (Prägestempel 32) ist an einer Gestellplatte 40 angeordnet, die sich in Blickrichtung auf die Fig. 2 gesehen parallel zum oberen Querträger 28 erstreckt und über die beiden Längsträger 26 in vertikaler Richtung auf Abstand zu dem Querträger 28 gehalten ist. Die Prägeeinheit 34 weist auf ihrer Unterseite KenndatenEinheiten 42 auf, die auswechselbar ausgelegt sind, d.h. in der Art von Einzellettern oder Matrizen lassen sich einzelne Code-Ziffern 22 oder Buchstaben oder auch Bildsymbole innerhalb der leistenartigen Kenndateneinheit austauschen. Die dahingehenden Kenndaten können in Nebeneinander- und Übereinanderanordnung Gruppen an Informationsgehalten ausbilden, so dass sich als Prägebild ein Kenndatenfeld ergibt, wie es in der Fig.3 für das Kunststofferzeugnis mit X als Leerplatzhalter näher bezeichnet ist.

Im angehobenen Zustand des Prägestempels 32 mit Prägeeinheit 34 sowie den Kenndateneinheiten 42 kann die Zufuhr von zu prägenden Erzeugnissen, wie den Behältern 10, erfolgen bzw. die geprägten Erzeugnisse werden aus der Prägevorrichtung abtransportiert. Der eigentliche Prägevorgang erfolgt im abgesenkten Zustand des Prägestempels 32 gemäß den Darstellungen nach den Fig.1 und 2, wobei die Kenndateneinheiten 42 dann in Anlage mit dem Kenndatenfeld sind, im vorliegenden Fall mit den flächigen Teilen des Knebelverschlusses 20 gemäß der Darstellung nach der Fig.3.

Für die Einprägung der Kenndaten ist das Kunststofferzeugnis herstellbedingt erwärmt oder die Prägeeinheit 34 selbst wird über eine nicht näher dargestellte Heizeinrichtung erwärmt. Ferner ist die Zu- und Abfuhrrichtung für das Kunststofferzeugnis in der Fig.1 mit einem Pfeil Z gekennzeichnet, so dass die ungeprägten Erzeugnisse in Blickrichtung auf die Fig.1 von links kommend durch den Prägestempel 34 mittig in der Vorrichtung geprägt und im geprägten Zustand rechts aus der Prägevorrichtung für den Weitertransport, beispielsweise zu einer Verpackungsmaschine (nicht dargestellt), weitertransportiert sind. Mithin ist die Zu- und Abfuhrrichtung Z für das Kunststofferzeugnis quer zur Prägerichtung mit dem Prägestempel 32 orientiert, der die Prägeeinheit 34 in Blickrichtung auf die Fig. 1 und 2 gesehen in vertikaler Richtung zur Längsachse 44 der Vorrichtung (vgl. Fig.2) verfährt.

Wie sich aus den Figuren des weiteren ergibt, ist in gegenläufiger Bewegungsrichtung synchron oder zeitlich versetzt mit dem Prägestempel verfahrbar ein Gegenhaltestempel 46 vorhanden. Auch bei dem Gegenhaltestempel 46 handelt es sich um einen hydraulisch, pneumatisch oder elektrisch betätigbaren Arbeitszylinder mit einer Kolbenstange 48, an dessen freiem Ende die Gegenhalteplatte 50 mit dem aufgesetzten Gegenhalteteil 52 angeordnet ist. Des weiteren weist der Gegenhaltestempel 46 gleichfalls ein Gehäuseteil 54 auf, das mit einer unteren Gestellplatte 56 fest verbunden ist. Auch die lineare Ausfahrbewegung für den Gegenhaltestempel 46 orientiert sich in Richtung der Längsachse 44 der gesamten Prägevorrichtung. Des weiteren sind innerhalb des Gestells 24 vier säulenartige Führungen 58 vorhanden, die sich parallel zur Längsachse 44 der Prägevorrichtung erstrecken und mit ihren jeweils freien Enden sind die säulenartigen Führungen 58 paarweise in der oberen Gestellplatte 40 sowie der unteren Gestellplatte 56 gelagert. Sowohl die plattenartige Prägeeinheit 34 als auch die Gegenhalteplatte 50 mit ihrem rechteckförmigen Querschnitt sind über Führungsmanschetten 60 an den Führungssäulen 58 längsverfahrbar gelagert, so dass beim Ein- und Ausfahren der Stempel 32 und 46 die zugeordneten Platten entsprechend mitbewegt werden, wohingegen die Gehäuseteile 38 und 54 stationär im Gestellrahmen 24 gehalten sind.

Wie sich des weiteren aus der Fig.1 ergibt, sind in der dahingehenden Seitenansicht die säulenartigen Führungen 58 unmittelbar benachbart zu den Stempeln 32 und 46 angeordnet, so dass dergestalt in hohem Maße die Aussteifung des Gesamtsystems Prägevorrichtung erreicht ist. Die plattenartige Prägeeinheit 34 sowie die Gegenhalteplatte 50 sind einander benachbart zugewandt und der Präge(32)- sowie der Gegenhaltestempel (46) greifen mit ihren Kolbenstangen 36 bzw. 48 an der jeweils zuordenbaren Platte 34;50 an und sind mit ihrem Gehäuseteil 38 bzw. 54 feststehend an dem Gestell 24 angebracht. Des weiteren ist eine über eine Säulenaufhängung 62 mit vier Säulen eine mit dem Gestell 24 fest verbundene Führungsplatte 64 vorhanden, die zwischen plattenartiger Prägeeinheit 34 und Gegenhalteplatte 50 angeordnet die Führung der Kunststofferzeugnisse gemäß der beispielhaften Darstellung nach der Fig. 3 für einen Einprägevorgang innerhalb des Gestells 24 mit den Kenndaten vornimmt. Dank der Führungsplatte 64 ist eine weitere Aussteifung des Gesamtsystems Prägevorrichtung erreicht und im übrigen lassen sich die Behälter 10 genau durch die abgehängte Führungsplatte 64 führen, so dass verwischte Prägungen oder Fehlprägungen mit Sicherheit vermieden sind.

Die genannte Anordnung mit Prägestempel 32 und Gegenhaltestempel 46 läßt sich innerhalb der Vorrichtung auch umkehren und gegebenenfalls läßt sich auch der Gegenhaltestempel 46 als weiterer Prägestempel ausbilden, sofern von beiden Seiten aus innerhalb der Prägevorrichtung eine Einprägung von Kunststofferzeugnissen gewünscht ist. Als Einprägetemperatur kommt eine solche für das jeweilige Kunststofferzeugnis in Frage, die einen sicheren Einprägevorgang erlaubt, ohne das Kunststoffmaterial beispielsweise durch Abfließen oder Verbrennen zu beschädigen. In Abhängigkeit von dem eingesetzten Kunststoffmaterial und den Materialstärken für das Kunststofferzeugnis können somit die Einprägetemperaturen variieren.

Die in den Fig.1 und 2 gezeigte Prägevorrichtung läßt sich insbesondere in Reihe an eine Herstellmaschine für ein Blasform-, Füll- und Siegelverfahren an Kunststofferzeugnissen anschließen und die aus der Herstellmaschine ausgebrachten Produktmengen lassen sich quasi kontinuierlich durch die Prägestation leiten und mit den Einprägungen versehen. Die Prägevorrichtung kann gegebenenfalls mit einer Stanzeinheit (nicht dargestellt) kombiniert werden, die während des Einprägevorgangs eine mögliche Abfall-Randzone an dem jeweiligen Kunststofferzeugnis entfernt. Es besteht aber auch die Möglichkeit, die Prägevorrichtung zwischen Herstellmaschine und Stanzeinrichtung anzuordnen und der Taktzyklus kann derart gewählt werden, dass bei Stillstand der Transport- oder Förderkette für die hergestellten Kunststofferzeugnisse gestanzt und der vorangehenden Station die Einprägung für das jeweilige Kunststofferzeugnis vorgenommen wird. Des weiteren besteht die Möglichkeit, die Einprägung über eine opto-elektronische Kontrolle zu überwachen, um festzustellen, ob die Prägung vollständig vorhanden und gut lesbar ist. Bei Nichterfüllung dieses Qualitätskriteriums könnten die derart festgestellten Kunststofferzeugnisse nach der Stanzeinrichtung als Fehlteil aus der weiteren Transportkette in Richtung Verpakkungsstation ausgeschleust werden.

## Patentansprüche

1. Prägevorrichtung zum Einprägen von Kenndaten in Kunststofferzeugnisse, wie Behälter, wobei in einem Gestell (24) der Vorrichtung mindestens ein Prägestempel (32) mit einer Prägeeinheit (34) mit auswechselbaren Kenndateneinheiten (42) längsverfahrbar geführt ist und in einem angehobenen Zustand die Zu- und Abfuhr der zu prägenden bzw. geprägten Erzeugnisse ermöglicht und in einem abgesenkten Zustand die Einprägung der Erzeugnisse vornimmt, wobei in gegenläufiger Bewegungsrichtung synchron oder zeitlich versetzt mit dem Prägestempel (32) verfahrbar ein Gegenhaltestempel (46) vorhanden ist, und wobei das Gestell (24) säulenartige Führungen (58) für die Längsführung der plattenartigen Prägeeinheit (34) und einer Gegenhalteplatte (50) des Gegenhaltestempels (46) aufweist, **dadurch gekennzeichnet, dass** eine über eine Säulenaufhängung mit dem Gestell (24) verbundene Führungsplatte (64) vorhanden ist, die zwischen plattenartiger Prägeeinheit (34) und Gegenhalteplatte (50) angeordnet die Führung der Kunststofferzeugnisse für einen Einprägevorgang innerhalb des Gestells (24) vornimmt.

2. Prägevorrichtung nach Anspruch 1, **dadurch gekennzeichnet, dass** für die Einprägung der Kenndaten das Kunststofferzeugnis und/oder die Prägeeinheit (34) erwärmbar ist.

3. Prägevorrichtung nach Anspruch 1 oder 2, **dadurch gekennzeichnet, dass** die Zu- und Abfuhrrichtung (Z) für das Kunststofferzeugnis längs oder quer zur Prägerichtung mit dem Prägestempel (32) erfolgt.

4. Prägevorrichtung nach einem der Ansprüche 1 bis 3, **dadurch gekennzeichnet, dass** die plattenartige Prägeeinheit (34) sowie die Gegenhalteplatte (50) einander benachbart zugewandt sind und der Präge(32)- sowie der Gegenhaltestempel (46) greifen mit ihren Kolbenstangen (36;48) an der jeweils zuordenbaren Platte (34;50) an und sind mit ihrem Gehäuseteil (38;54) feststehend an dem Gestell (24) angebracht.

5. Prägevorrichtung nach einem der Ansprüche 1 bis 4, **dadurch gekennzeichnet, dass** die Kunststofferzeugnisse in der Art von Ampullen als Behälter (10) ausbildbar sind und in einem Band über eine Randzone (12) zusammenhängend in zeitlicher Hintereinanderabfolge die Einprägung erhalten und dass dabei mehrere benachbarte Ampullen gleichzeitig mit der Prägung versehbar sind.

## Claims

1. A stamping device for stamping identification data in plastic products, such as containers, in a frame (24) of the device at least one stamp (32) having a stamping unit (34) with interchangeable identification data units (42) being guided with longitudinal movement, and in a raised state enabling movement to it and away from it of the products which are to be stamped or have been stamped, and in a lowered state undertaking the stamping of the products, there being a counter-holding stamp (46) moveable in the opposite direction of movement synchronously with or offset in time in relation to the stamp (32), and the frame (24) having columnar guides (58) for longitudinally guiding the plate-like stamping unit (34) and a counter-holding plate (50) of the counter-holding stamp (46), **characterised in that** there is a guide plate (64) connected to the frame (24) by means of a column suspension and which, positioned between the plate-like stamping unit (34) and the counter-holding plate (50), guides the plastic products for a stamping process within the frame (24).

2. The stamping device according to Claim 1, **characterised in that** the plastic product and/or the stamping unit (34) can be heated for the stamping of the identification data.

3. The stamping device according to Claim 1 or 2, **characterised in that** the direction of delivery and removal (Z) of the plastic product is longitudinal or transverse with respect to the stamping direction of the stamp (32).

4. The stamping device according to any of Claims 1 to 3, **characterised in that** the plate-like stamping unit (34) and the counter-holding plate (50) are adjacent to and facing one another, and the stamp (32) and the counter-holding stamp (46) engage the respectively assigned plate (34;50) with their piston rods (36;48) and are attached, fixed, with their housing part (38; 54) to the frame (24).

5. The stamping device according to any of Claims 1 to 4, **characterised in that** the plastic products can be configured in the manner of ampules as containers (10) and, connected in a strip by an edge zone (12) are stamped in succession, and that a plurality of adjacent ampules is provided here with the stamping simultaneously.

## Revendications

1. Dispositif d'estampage pour l'estampage de données caractéristique dans des produits en matière plastique comme des récipients, dans lequel, dans un bâti (24) du dispositif, au moins un poinçon (32) d'estampage, ayant une unité (34) d'estampage à unités (42) de données caractéristiques remplaçables, est guidé en pouvant être déplacé longitudinalement et rend possible, dans un état soulevé, l'entrée des produits à estamper et la sortie des produits estampés et, dans un état abaissé, effectue l'estampage des produits, dans lequel il y a un poinçon (46) de contre-support, qui peut être déplacé dans un sens de déplacement contraire, en synchronisme ou d'une manière décalée dans le temps, avec le poinçon (32) d'estampage et dans lequel le bâti (24) comporte des guidages (38) de type en colonne, pour le guidage longitudinal de l'unité (34) d'estampage du type à plateau et d'un plateau (50) de contre-support du poinçon (46) de contre support, **caractérisé en ce qu'**il a un plateau (64) de guidage, qui est relié au bâti (24) par une suspension sur colonnes et qui est disposé entre l'unité (34) d'estampage de type à plateau et le plateau (50) de contre-support effectue le guidage des produits en matière plastique pour une opération d'estampage à l'intérieur du bâti (24).

2. Dispositif d'estampage suivant la revendication 1, **caractérisé en ce que** pour l'estampage des données caractéristiques, le produit en matière plastique et/ou l'unité (34) d'estampage peut être échauffé.

3. Dispositif d'estampage suivant la revendication 1 ou 2, **caractérisé en ce que** le sens (Z) d'entrée et de sortie du produit en matière plastique est dirigé longitudinalement ou transversalement à la direction d'estampage par le poinçon (32) d'estampage.

4. Dispositif d'estampage suivant la revendication 1 à 3, **caractérisé en ce que** l'unité (34) d'estampage du type en plateau ainsi que le plateau (50) de contre-support sont tournés l'un vers l'autre, en étant voisins et le poinçon (32) d'estampage ainsi que le poinçon (46) de contre-support attaquent par leur tige (36 ; 48) de piston le plateau (34 ; 50) qui peut leur être associé respectivement et sont mis de manière fixe sur le bâti (24) par leur partie (38 ; 54) de corps.

5. Dispositif d'estampage suivant l'une des revendications 1 à 4, **caractérisé en ce que** les produits en matière plastique peuvent être constituées en tant que récipients (10) à la manière d'ampoules et en une bande reçoivent l'estampage sur une zone (12) de bord, en étant d'un seul tenant, en succession les uns derrière les autres dans le temps et **en ce que** plusieurs ampoules voisines peuvent être munies de l'estampage en même temps.
